# EUROPEAN PATENT APPLICATION

(11) **EP 2 639 498 A1**
(43) Date of publication of application: **18.09.2013**
(21) Application number: 13152947.1
(22) Date of filing: 28.01.2013
(51) Int. Cl.: F21V 8/00

(54) **Light Guide Panel and Backlight Unit having the same**

(30) Priority: 14.03.2012 US 201261610736 P; 10.05.2012 KR 20120049468
(71) Applicant: Samsung Electronics Co., Ltd, Gyeonggi-do 443-742 (KR)
(72) Inventor: Lee, Dae-hee, Hwaseong-si, Gyeonggi-do (KR); Baek, Do-hyeon, Yongin-si, Gyeonggi-do (KR); Lee, Kil-hong, Seongnam-si, Gyeonggi-do (KR); Lee, Young-chol, Hwaseong-si, Gyeonggi-do (KR); Jung, Myung-ryul, Hwaseong-si, Gyeonggi-do (KR); Cho, Kun-ho, Suwon-si Gyeonggi-do (KR); Cho, Byoung-jin, Anyang-si, Gyeonggi-do (KR); Choi,, Hyeong-sik, Hwaseong-si, Gyeonggi-do (KR); Hyung, Sin-wook, Buk-gu Busan (KR)
(74) Representative: Misselbrook, Paul

(57) **Abstract**

A light guide panel (LGP) is provided, which includes a front surface (112), a rear surface (111), and four edge surfaces (113,114,115,116), in which rays of light emitted from light sources are introduced through at least one of the four edge surfaces, a plurality of lenticular patterns (117) formed on one of the front surface and the rear surface, and a plurality of light emitting patterns (118) which induce the rays of light emitted from the light sources toward the front surface. The plurality of light emitting patterns (118) are integrally formed with the plurality of lenticular patterns (117).

## Description

### CROSS-REFERENCE TO RELATED APPLICATIONS

This application claims priority from U.S. Provisional Application No. 61/610,736, filed on March 14, 2012 in the United States Patent and Trademark Office, and from Korean Patent Application No. 10-2012-0049468, filed on May 10, 2012, in the Korean Intellectual Property Office, the disclosures of which are incorporated herein by reference in their entireties.

### BACKGROUND

### 1. Field

Panels and units consistent with what is disclosed herein relate to a light guide panel and a backlight unit having the same, and more particularly, to a light guide panel having lenticular patterns and a backlight unit having the same.

### 2. Description of the Related Art

The liquid crystal display (LCD) generally includes a display panel which displays an image thereon, and a backlight unit which supplies light from the back of the display panel. The LCD is widely used in display devices such as televisions, computer monitors, or the like.

Among various types of backlight units, the edge backlight unit includes a plurality of light sources (e.g., LEDs) which are generally arranged on a side surface, and a light guide panel (LGP) to guide the light supplied from the light sources to the display panel.

The LGP generally includes a plurality of light emitting patterns in a dot form to guide the light toward the display panel. Meanwhile, when implemented in a display device to provide three dimensional (3D) images, the LGP may have a plurality of lenticular patterns on one surface to improve 3D scanning efficiency. In such LGP having the lenticular patterns with the light emitting patterns, the light emitting patterns are generally formed on a rear surface of the LGP, and the lenticular patterns are formed on a front surface of the LGP.

### SUMMARY

Accordingly, one or more exemplary embodiments overcome the above disadvantages and other disadvantages not described above. Also, the exemplary embodiments are not required to overcome the disadvantages described above, and exemplary embodiments may not overcome any of the problems described above.

According to an aspect of an exemplary embodiment, there is provided a light guide panel (LGP) of improved productivity and reduced manufacturing cost, which provides at least the same level of light efficiency and 3D scanning efficiency as those of a conventional LGP, and a backlight unit having the same.

According to aspect of an exemplary embodiment, there is provided a light guide panel (LGP) for use in a display device, which may include a front surface, a rear surface, and four edge surfaces, in which rays of light emitted from light sources are introduced through at least one of the four edge surfaces, a plurality of lenticular patterns formed on one of the front surface and the rear surface, and a plurality of light emitting patterns which induce the rays of light emitted from the light sources toward the front surface, wherein the plurality of light emitting patterns are integrally formed with the plurality of lenticular patterns.

Each of the light emitting patterns may have one curved surface.

The light emitting patterns may each be formed concavely or convexly on surfaces of the lenticular patterns.

The light emitting patterns may each be formed concavely on the lenticular patterns, and have two reflection surfaces inclined with respect to the front or rear surface.

The two reflection surfaces may be planar.

The two reflection surfaces may be inclined with respect to the rear surface by 35° to 80°.

The two reflection surfaces may be at an angle of 70° to 110°.

Pitch between two adjacent light emitting patterns may be below 0.5 mm.

The LGP may receive the ray of lights through two edge surfaces among the four edge surfaces that are arranged opposite to each other.

According to an aspect of another exemplary embodiment, there is provided a backlight unit for use in a display device which may include a light guide panel (LGP) comprising a front surface, a rear surface, and four edge surfaces, at least one light source which provides a ray of light into the LGP through at least one of the four edge surfaces, a rear optical sheet unit which is arranged in back of the LGP, and a front optical sheet unit which is arranged in front of the LGP, in which the LGP may include a plurality of lenticular patterns formed convexly on one of the front surface and the rear surface, and a plurality of light emitting patterns which induce the rays of light emitted from the light sources toward of the front surface. The plurality of light emitting patterns may be formed integrally with the plurality of lenticular patterns.

The light emitting patterns may each include one curved surface.

The front optical sheet unit may include a plurality of optical sheets.

The front optical sheet unit may include a diffusion sheet, a prism sheet and a protection sheet.

The front optical sheet unit may include a diffusion sheet, a prism sheet and a reflection polarization sheet.

The light emitting patterns may each be formed concavely on the lenticular patterns, and may each include two reflection surfaces inclined with respect to the front surface or the rear surface.

The front optical sheet unit may have only one optical sheet.

The front optical sheet unit may have a diffusion sheet only.

### BRIEF DESCRIPTION OF THE DRAWINGS

The above and/or other aspects will be more apparent by describing certain exemplary embodiments with reference to the accompanying drawings, in which:

FIG. 1 is a plan view of a light guide panel (LGP) according to an embodiment;

FIG. 2 is a schematic rear perspective view of the LGP of FIG. 1;

FIG. 3 is a partially enlarged cross-section view taken on line III-III of FIG. 2;

FIG. 4 is a schematic, partial cross-section view of a backlight unit having the LGP of FIGS. 1 to 3 according to an embodiment;

FIG. 5 is a plane view of the LGP according to a second embodiment;

FIG. 6A is a schematic rear perspective view of the LGP of FIG. 5;

FIG. 6B is a rear perspective view of the LGP according to an alternative embodiment;

FIG. 7 is a side view of the LGP of FIG. 5;

FIG. 8 is a partial cross-section view taken on line VIII-VIII of FIG. 7;

FIG. 9 is a schematic, partial cross-section view of a backlight unit having the LGP of FIGS. 5 to 8 according to an embodiment;

FIGS. 10A and 10B are the brightness distribution image obtained from test #1 and a corresponding graph;

FIGS. 11 A and 11 B are the brightness distribution image obtained from test #2 and a corresponding graph;

FIGS. 12A and 12B are the brightness distribution image obtained from test #3 and a corresponding graph;

FIGS. 13A and 13B are the brightness distribution image obtained from test #4 and a corresponding graph;

FIGS. 14A and 14B are the brightness distribution image obtained from test #5 and a corresponding graph;

FIGS. 15A and 15B are the brightness distribution image obtained from test #6 and a corresponding graph;

FIGS. 16A and 16B are images of a conventional LGP and a LGP according to an embodiment, each photographed at the 3D scanning efficiency test; and

FIG. 17 presents two graphs representing brightness distribution data on the central portion of the LGP among the data of Table 3 and Table 4.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. The matters defined in the description, such as detailed construction and elements, are provided to assist in a comprehensive understanding of the exemplary embodiments. Accordingly, it is apparent that the exemplary embodiments can be carried out without those specifically defined matters. Also, well-known functions or constructions are not described in detail since they would obscure the aspects of the exemplary embodiments with unnecessary detail.

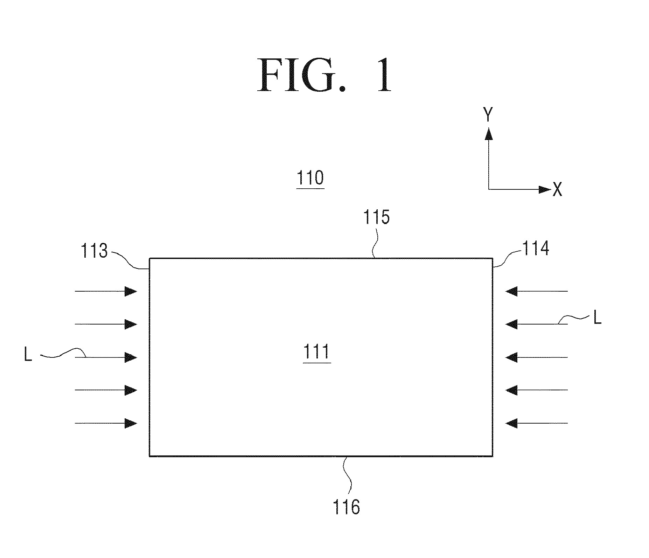

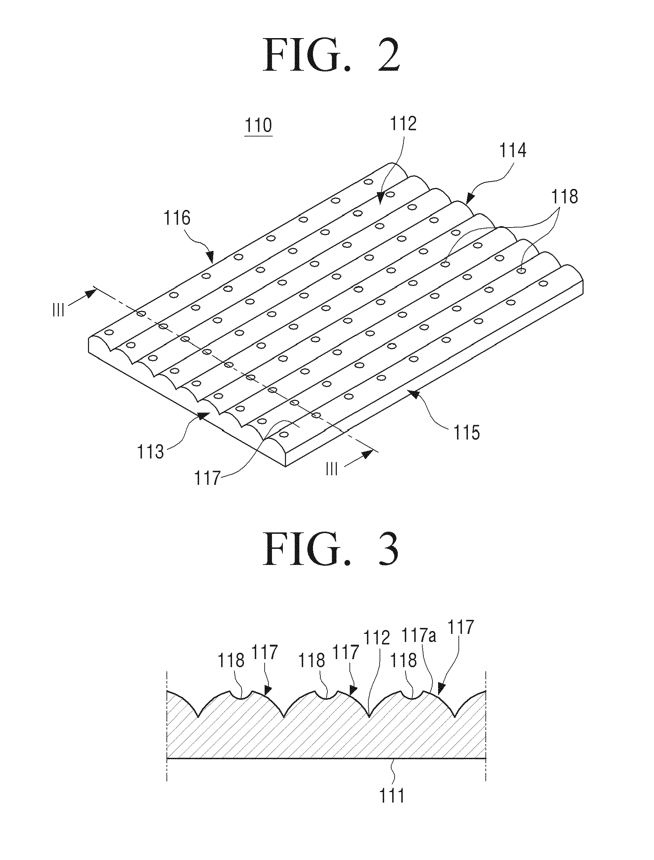

FIG. 1 is a plan view of a light guide panel (LGP) according to an embodiment, FIG. 2 is a schematic rear perspective view of the LGP of FIG. 1, and FIG. 3 is a partially enlarged cross-section view taken on line III-III of FIG. 2.

Referring to FIGS. 1 to 3, a light guide panel (LGP, 110) according to an embodiment may be formed in approximately a rectangular shape, having a front surface 111, a rear surface 112, and four edge surfaces 113, 114, 115, 116.

The front surface 111 may face a display panel (not illustrated) and opposed to the rear surface 112. For convenience of explanation, the four edge surfaces may be referred to as a first edge surface 113, a second edge surface 114, a third edge surface 115, and a fourth edge surface 116, in which the first and second edge surfaces 113, 114 may be arranged opposite to each other, and the third and fourth edge surfaces 115, 116 may be arranged opposite to each other.

Referring to FIG. 1, lights L emitted from the light sources are introduced into the LGP 110 through the first and second edge surfaces 113, 114. Although the lights are entered through two edge surfaces 113, 114 in one embodiment, this is only for illustrative purpose. Accordingly, in other embodiments, the lights may be introduced through only one 113 of the four edge surfaces or through more than three of the edge surfaces.

Referring to FIGS. 2 and 3, a plurality of lenticular patterns 117 may be convexly formed on the rear surface 112 to enhance 3D scanning efficiency. The lenticular patterns 117 may be uniformly formed between the first and second edge surfaces 113, 114 where the lights are entered, and arranged parallel to each other. Each of the lenticular patterns 117 may have approximately semi-circular cross-section, but this may be varied depending on the embodiments.

The lenticular patterns 117 minimize the spreading of the lights which enter through the first and second edge surfaces 113, 114 in a widthwise direction (i.e., in Y direction) of the LGP 110. That is, due to the lenticular patterns 117, the lights which enter through the first and second edge surfaces 113, 114 extend along the lengthwise direction (i.e., in X direction) of the LGP 110. That is, higher 3D scanning efficiency is obtained, as the incident light extends along the lengthwise direction (i.e., in X direction) of the LGP due to the lenticular patterns 117.

In one embodiment, the lenticular patterns 117 may be formed on the rear surface 112 of the LGP 110. Alternatively, the lenticular patterns 117 may be formed on the front surface 111 of the LGP 110.

Referring to FIGS. 2 and 3, a plurality of light emitting patterns 118 may be integrally formed with the lenticular patterns 117. The light emitting patterns 118 scatter the lights in several directions, thereby inducing the lights toward the direction of the display panel.

The light emitting patterns 118 may have one curved shaped corresponding to a portion of the spherical surface. In alternative embodiments, the light emitting patterns 118 may have curved shapes other than a spherical surface. The light emitting patterns 118 may be concavely formed on the surfaces 117a of the lenticular patterns 117. In alternative embodiments, the light emitting patterns 118 may be convexly formed on the surfaces 117a of the lenticular patterns 117.

The shape of the light emitting patterns 118 may generally be referred to as 'dots'. To be more specific, the light emitting patterns 118 are called 'dots' when the light emitting patterns 118 have substantially circular cross-section along an X-Y plane. In alternative embodiments, the light emitting patterns 118 may be bars rather than dots. That is, instead of having circular cross-section with respect to X-Y plane, the light emitting patterns 118 may have a more extended cross-section in lengthwise (i.e., X) or widthwise (i.e., Y) direction of the LGP 110.

Since the light emitting patterns 118 are integrated with the lenticular patterns 117, the lenticular patterns 117 and the light emitting patterns 118 may be concurrently formed. That is, the lenticular patterns 117 along with the light emitting patterns 118 may be imprinted, extruded, or injected for concurrent shaping.

In one example, the LGP 110 may be fabricated by imprinting as follows. First, shapes of the lenticular patterns 117 integrated with the light emitting patterns 118 are formed on a LGP material (e.g., polymethymethacrylate, PMMA) by pressing a mold corresponding to the lenticular patterns 117 integrated with the light emitting patterns 118 on the PMMA in a paste state containing therein hardening initiator. After that, by allowing the PMMA to harden under ultraviolet rays, the final form of the LGP 110 is prepared.

As explained above, the lenticular patterns 117 and the light emitting patterns 118 may be shaped by, for example, one processing (i.e., concurrently) during the preparation of the LGP 110. As a result, fabrication of the LGP 110 becomes simpler and the manufacturing cost decreases.

Meanwhile, the conventional LGP generally requires that the lenticular patterns and the light emitting patterns be formed on two different surfaces separately, instead of being integrated with each other. By way of example, the lenticular patterns are formed on the front surface, while the light emitting patterns are formed on the rear surface of the LGP. In such a conventional LGP, the lenticular patterns are formed first on the circular LGP disk and then the light emitting patterns are formed thereon in the post processing by laser processing or printing.

To prepare the conventional LGP wherein the lenticular patterns and the light emitting patterns are not integrally formed with each other, separate processing is required to shape the lenticular patterns and the light emitting patterns respectively. Accordingly, compared to the exemplary embodiment, fabrication of the conventional LGP is rather complicated and is of a higher cost.

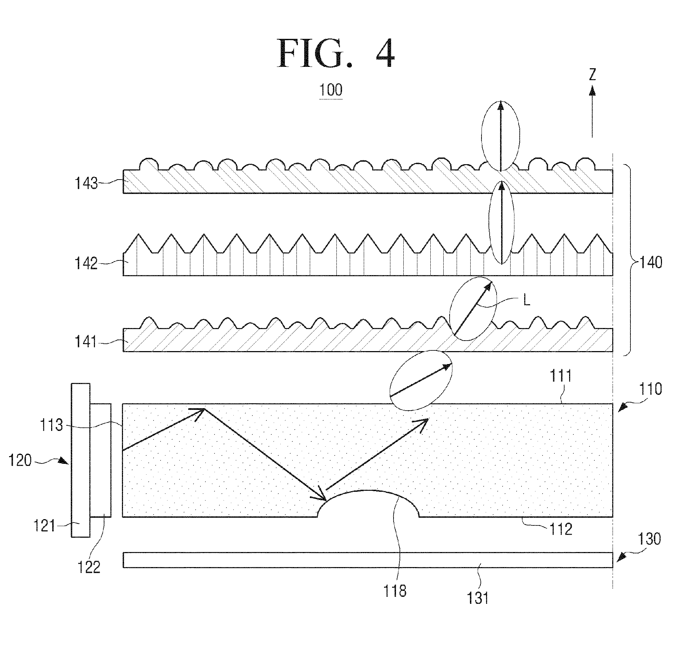

FIG. 4 is a schematic, partial cross-section view of a backlight unit having the LGP of FIGS. 1 to 3 according to an embodiment.

Referring to FIG. 4, the backlight unit 110 may include the LGP 110, a light source unit 120, a rear optical sheet unit 130, and a front optical sheet unit 140.

As explained above, the LGP 110 may have a plurality of lenticular patterns 117 formed on the rear surface 112 thereof, and the light emitting patterns 118 may be integrally formed with the lenticular patterns 117.

The light source unit 120 may be arranged opposite to the first edge surface 113 of the LGP 110. The light source unit 120 may include a circuit board 121 and a plurality of light sources 122 mounted on the circuit board 121. By way of example, the light source 122 may include LED. The rays of light emitted from the plurality of light sources 122 may be introduced into the LGP 110 through the first edge surface 113. Although not illustrated, another light source unit with the same structure as the light source unit 120 of FIG. 4 may be arranged opposite to the second edge surface 114 of the LGP 110.

The rear optical sheet unit 130 may be arranged in back of the LGP 110 and may include a reflection sheet 131. The reflection sheet 131 reflects the light leaking out from the rear surface 112 of the LGP 110 back to the LGP 110.

The front optical sheet 140 may be arranged in front of the LGP 110 and may include a diffusion sheet 141, a prism sheet 142 and a protection sheet 143. The diffusion sheet 141 diffuses the light emitted from the LGP 110, the prism sheet 142 focuses the light diffused at the diffusion sheet 141, and the protection sheet 143 protects the prism sheet 142 and also increases light uniformity. In an alternative embodiment, the protection sheet 143 may be substituted with a reflection polarization sheet for the purpose of enhancing light efficiency. The reflection polarization sheet may be a multi-layer reflective polarization prism sheet which collects, polarizes, and emits light, such as DBEFTM (Dual Brightness Enhancement Film) by 3M.

Referring to FIG. 4, the lights L generated at the light sources 122 are emitted in the front direction of the LGP 110 due to the LGP 110 and the reflection sheet 131, the brightness uniformity and viewing angle of the emitted lights are improved as the lights pass through three front optical sheets 141 142, 143, and then the lights L enter onto the display panel (not illustrated).

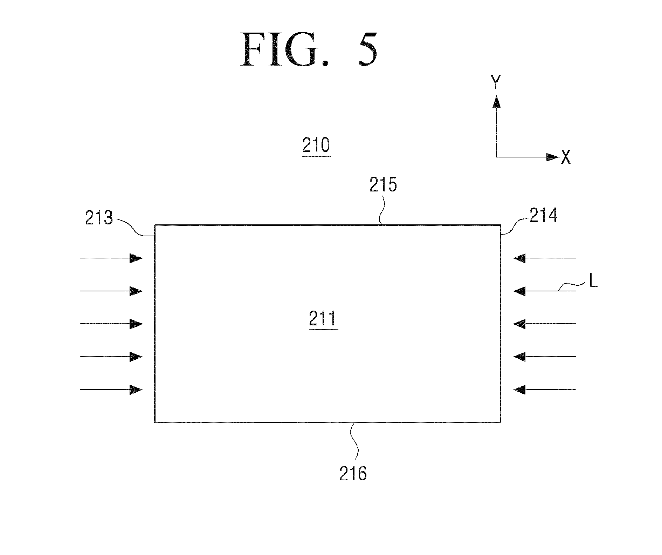

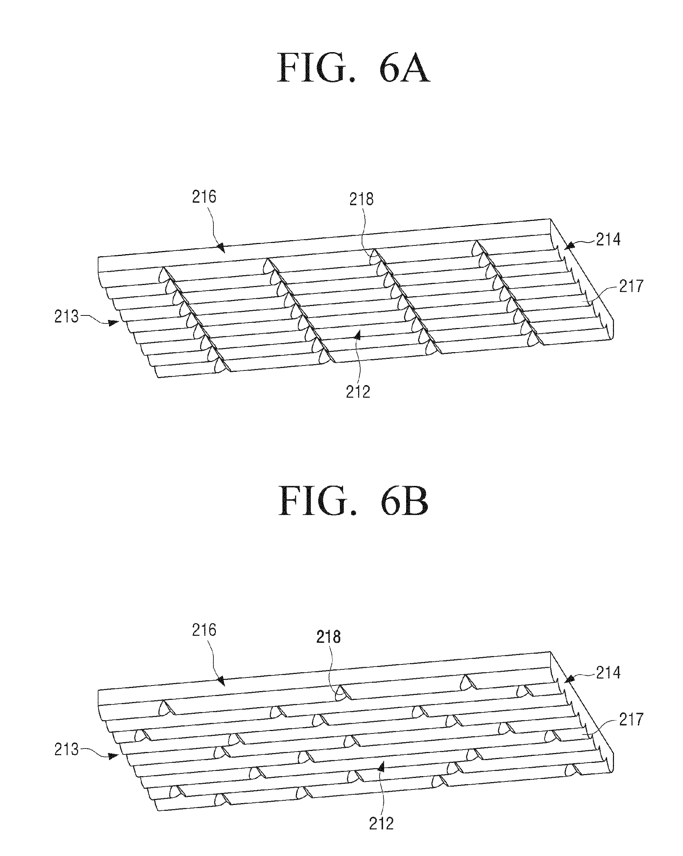

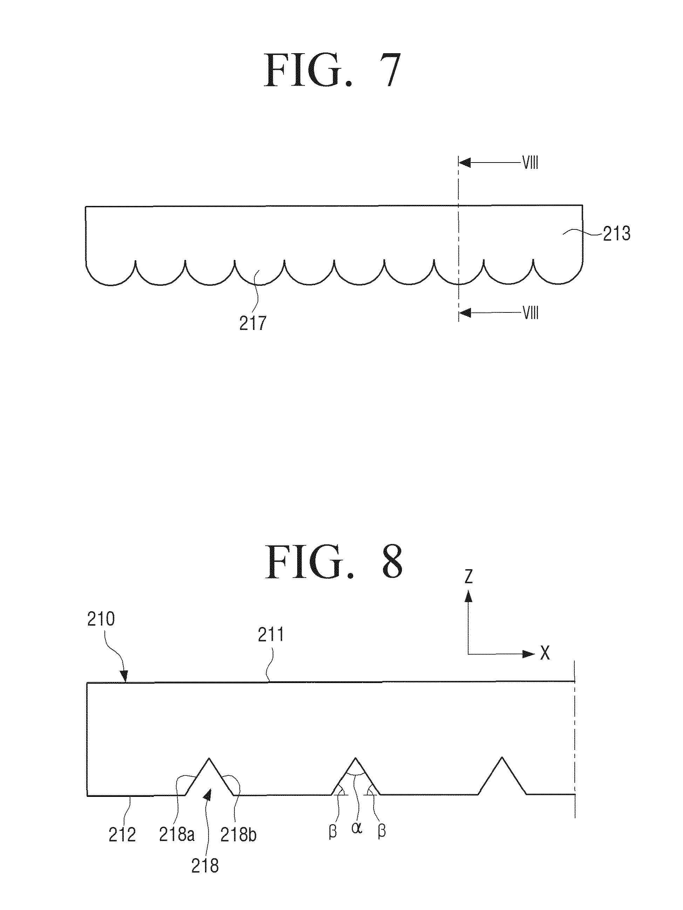

FIG. 5 is a plane view of the LGP according to a second embodiment, FIG. 6A is a schematic rear perspective view of the LGP of FIG. 5, FIG. 6B is a rear perspective view of the LGP according to an alternative embodiment, FIG. 7 is a side view of the LGP of FIG. 5, and FIG. 8 is a partial cross-section view taken on line VIII-VIII of FIG. 7.

Referring to FIGS. 5 to 8, the LGP 210 according to a second embodiment may be formed in approximately rectangular shape, and may include a front surface 211, a rear surface 212, and four edge surfaces 213, 214, 215, 216. For convenience of explanation, the four edge surfaces may be referred to as a first edge surface 213, a second edge surface 214, a third edge surface 215, and a fourth edge surface 216.

The lights L emitted from the light sources are introduced into the LGP 210 through the first and second edge surfaces 213, 214. Although the lights enter through the two edge surfaces 213, 214 in one embodiment, this is only for illustrative purposes. Accordingly, in another embodiment, the lights may be introduced into the LGP 210 through only one of the four edge surfaces or through more than two edge surfaces.

The LGP 210 according to the second embodiment may have a similar structure as that of the LGP 110 explained above. Accordingly, like the LGP 110 explained above, the LGP 210 according to the second embodiment may have a plurality of lenticular patterns 217 formed on the rear surface 212 thereof, and the light emitting patterns 218 may be integrally formed with the lenticular patterns 217. Referring to FIG. 6A, the light emitting patterns 218 formed on the LGP 210 may have a regular arrangement. Alternatively, referring to FIG. 6B, the light emitting patterns 218 may have irregular patterns in another embodiment.

The difference of the second embodiment lies in the shape of the light emitting patterns 218 of the LGP 210 which is different from the light emitting patterns 118 of the LGP 110 of the embodiment explained above. This will be explained in detail below.

Referring to FIGS. 6A and 8, the light emitting patterns 218 may be concavely formed from the surfaces of the lenticular patterns 217. The respective light emitting patterns 218 may have two reflection surfaces 218a, 218b and thus have similar shape as the prism. The reflection surfaces 218a, 218b of the light emitting patterns 218 may be planar, which is different from the spherically-curved surfaces of the light emitting patterns 118 explained above (see FIG. 3).

Referring to FIG. 8, the pair of reflection surfaces 218a, 218b are at an angle α and may be arranged symmetrically to each other. The angle between the two reflection surfaces 218a, 218b may range between 70° and 110°. Further, the respective reflection surfaces 218a, 218b are inclined with respect to the front surface 211 or the rear surface 212 (i.e., to X axis) of the LGP 210, and the angle β of inclination may preferably range between 35° and 80°.

Meanwhile, the pitch between two adjacent light emitting patterns 218 may preferably be 0.5 mm or below. For convenience of illustration, only three light emitting patterns 218 are depicted as being formed with one lenticular pattern 217, but it will be appreciated that the actual number of light emitting patterns 218 may advantageously be more than those illustrated in the figures.

As in the LGP 110 of the previous embodiment explained above, the LGP 210 according to the second embodiment may be fabricated by using imprinting, extruding or injection, and by applying these processes, the lenticular patterns 217 and the light emitting patterns 218 may be formed or shaped only by one process (i.e., concurrently). Accordingly, compared to the conventional LGP in which the light emitting patterns are formed by post-processing such as laser processing or printing, the fabrication of the LGP according to the second embodiment becomes simpler and requires less cost.

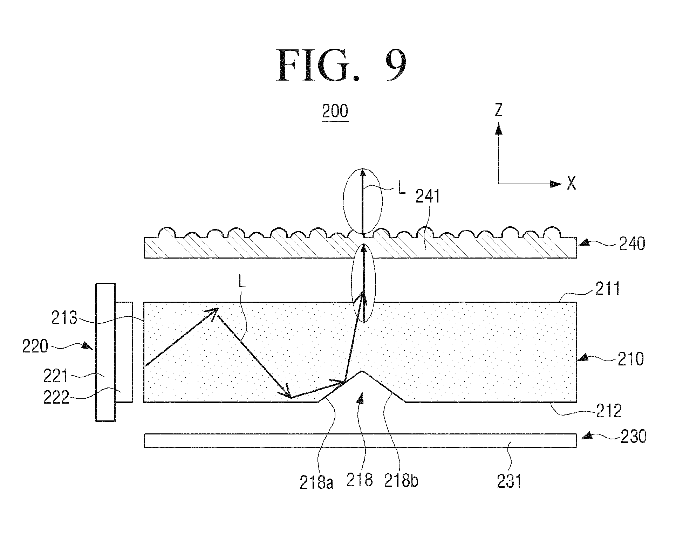

FIG. 9 is a schematic, partial cross-section view of a backlight unit having the LGP of FIGS. 5 to 8 according to an embodiment.

Referring to FIG. 9, the backlight unit 200 may include the LGP 210, a light source unit 220, a rear optical sheet unit 230 and a front optical sheet unit 240.

As explained above, the LGP 210 may have a plurality of lenticular patterns 217 formed on the rear surface 212 thereof, and the light emitting patterns 218 may be integrally formed with the lenticular patterns 217. The respective light emitting patterns 218 may have two reflection surfaces 218a, 218b and thus have similar cross-section as the prism.

The light source unit 220 and the rear optical sheet unit 230 are identical to the light source unit 120 and the rear optical sheet 130 explained above with reference to FIG. 4.

The front optical sheet unit 240 may have only one diffusion sheet 241, which is distinct from the front optical sheet unit 140 explained above.

Although the backlight unit 200 has only one diffusion sheet 241 in front of the LGP 210, the backlight unit 200 can at least maintain the same level of optical performance (such as light efficiency, viewing angle, 3D scanning efficiency, etc.) as the backlight units (such as the backlight unit 100) having a plurality of front optical sheets, by implementing light emitting patterns 218 having two planar reflection surfaces 218a, 218b.

The inventors have conducted tests to confirm the optical performance of the LGP 210 according to the second embodiment. Accordingly, the inventors used the LGP 210 explained above according to one embodiment, and compared this with a conventional LGP in which the lenticular patterns are formed on the front surface and the light emitting patterns, in a dot form, are formed on the rear surface.

Referring to Table 1 below, the test has been conducted four times with respect to the conventional LGP alone, the conventional LGP added with the diffusion sheet thereon, the conventional LGP added with the diffusion sheet and the prism sheet thereon, and the conventional LGP added with the diffusion sheet, the prism sheet thereon, and the protection sheet thereon, and two times with respect to the LGP 210 according to an embodiment, and the LGP 210 according to an embodiment added with the diffusion sheet.

**Table 1**

| | | Condition (Front optical sheets) | Resultant viewing angle |
|---|---|---|---|
| Conventional | Test #1 | None | 80 |
| | Test #2 | Diffusion sheet | 50 |
| | Test #3 | Diffusion sheet + prism sheet | 0° |
| | Test #4 | Diffusion sheet + prism sheet + protection sheet | 0° |
| Embodiment of the invention | Test #5 | None | -10°∼+10° |
| | Test #6 | Diffusion sheet | 0° |

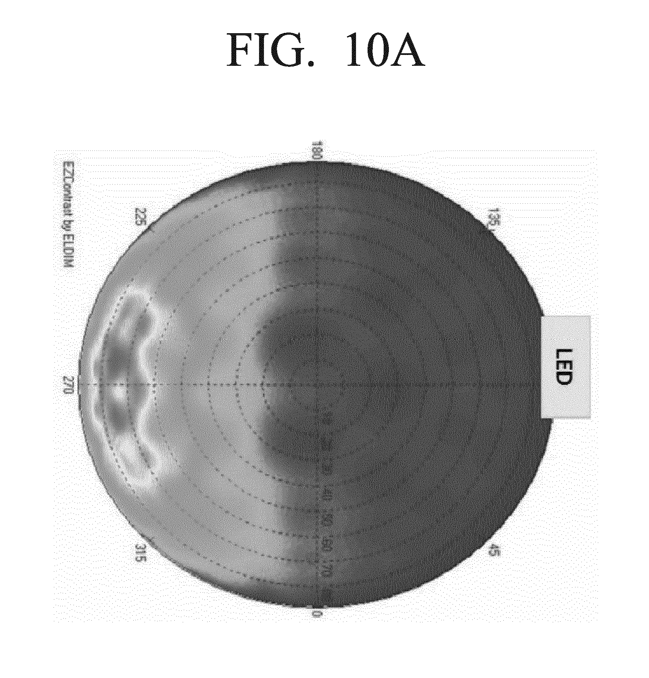

As a result of conducting test on six cases based on the conventional technology and the embodiment, brightness distribution image photographed from the front surface of the LGP and corresponding graph thereof are obtained as shown in FIGS. 10A to 15B.

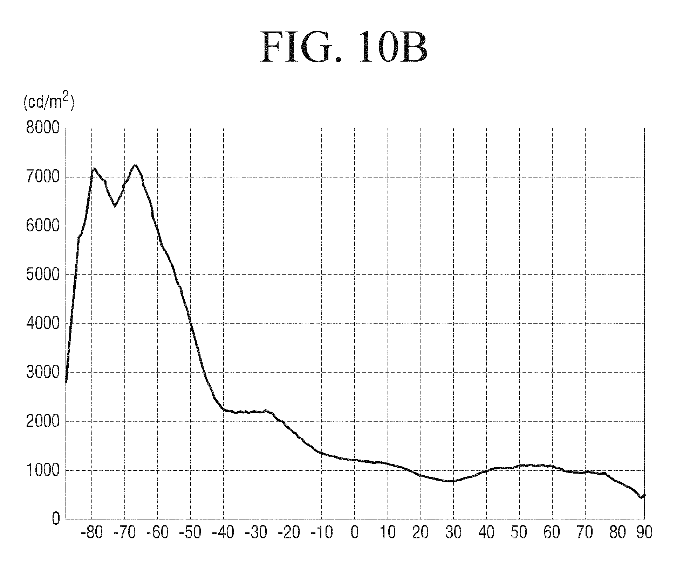

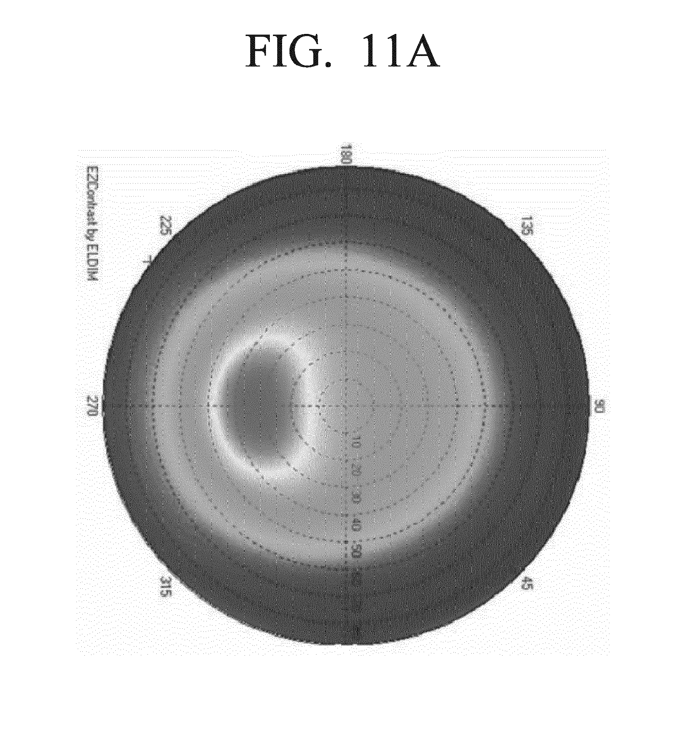

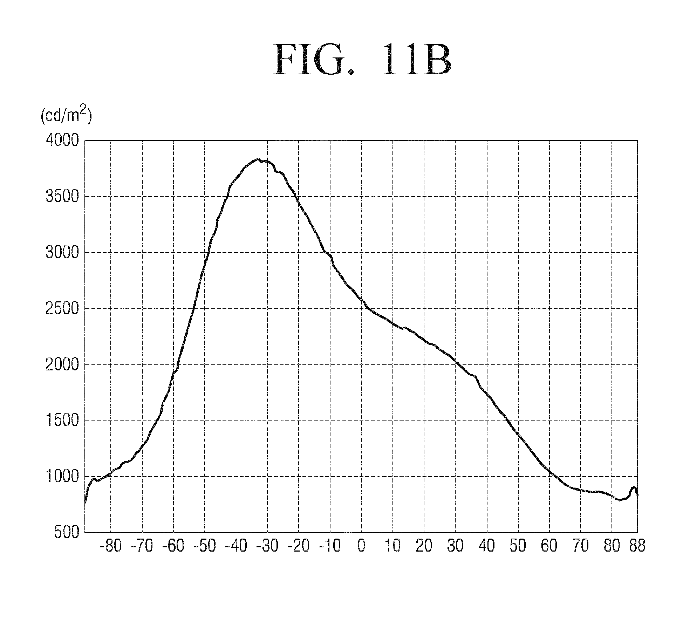

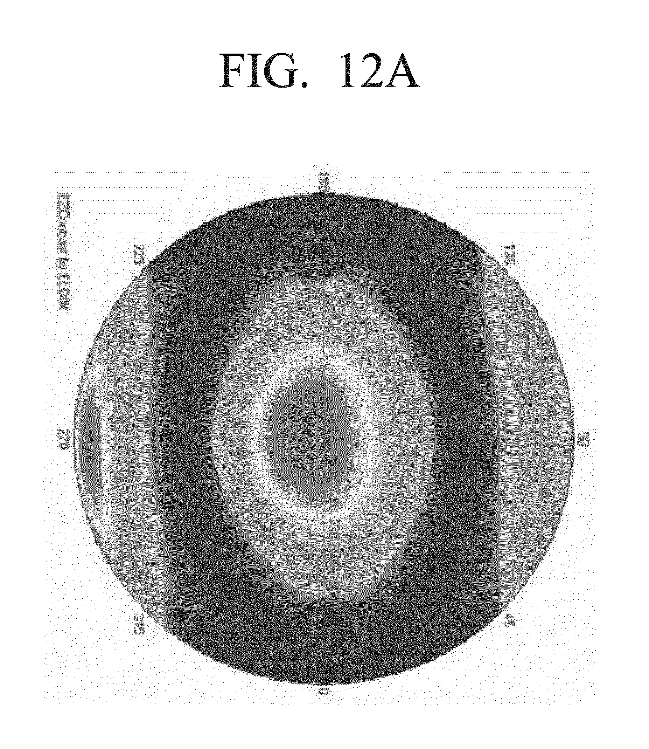

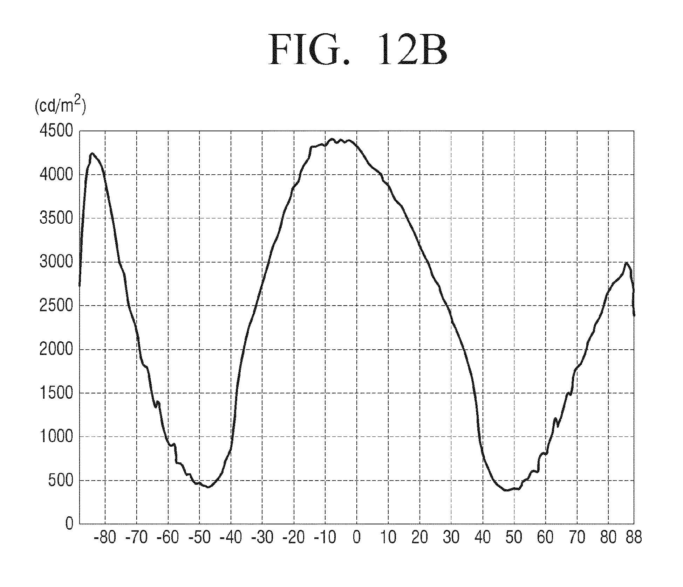

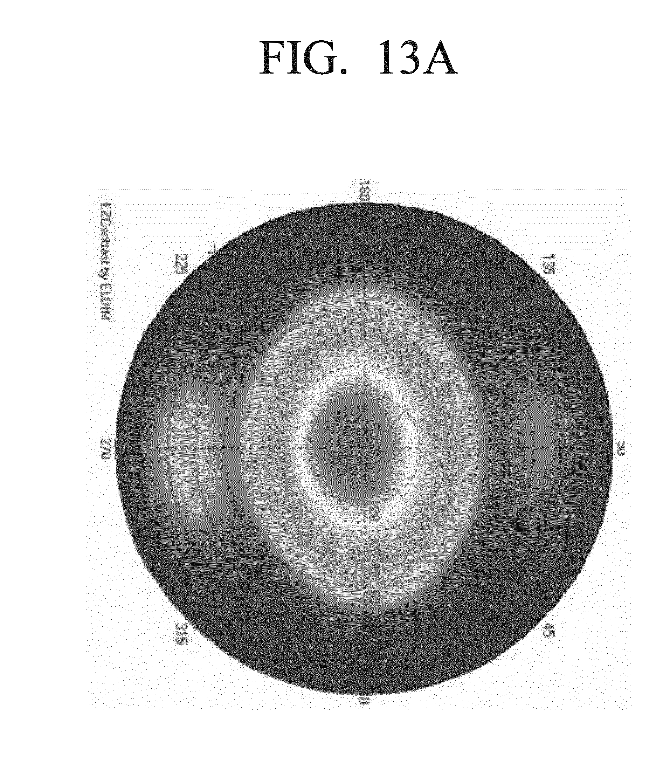

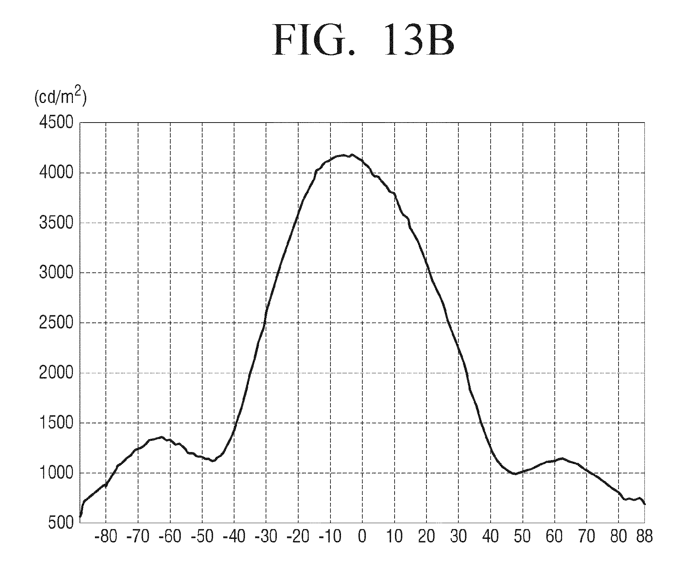

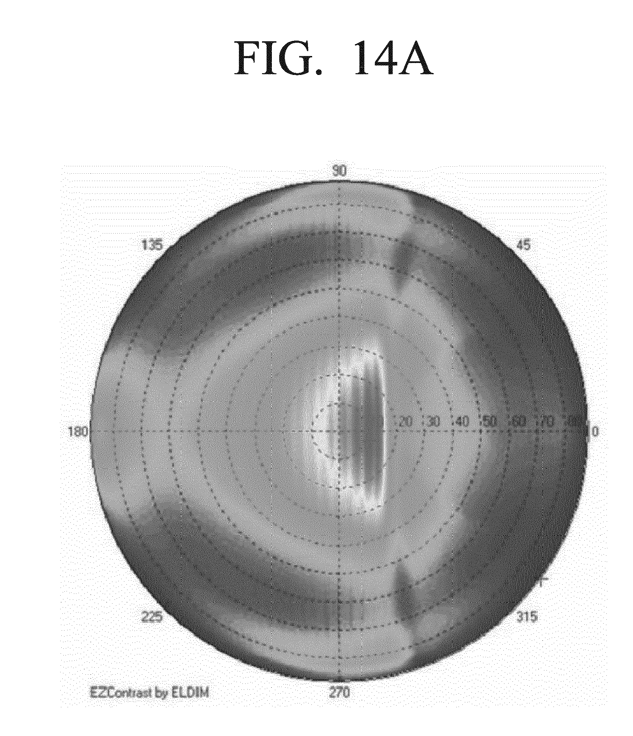

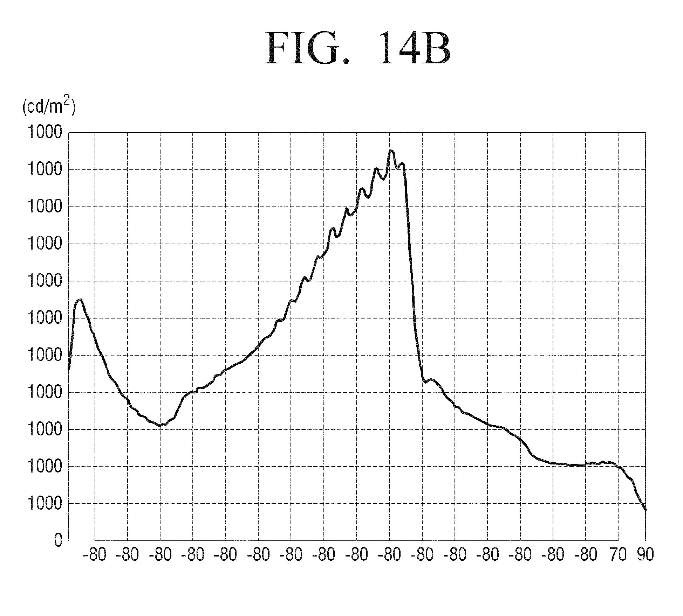

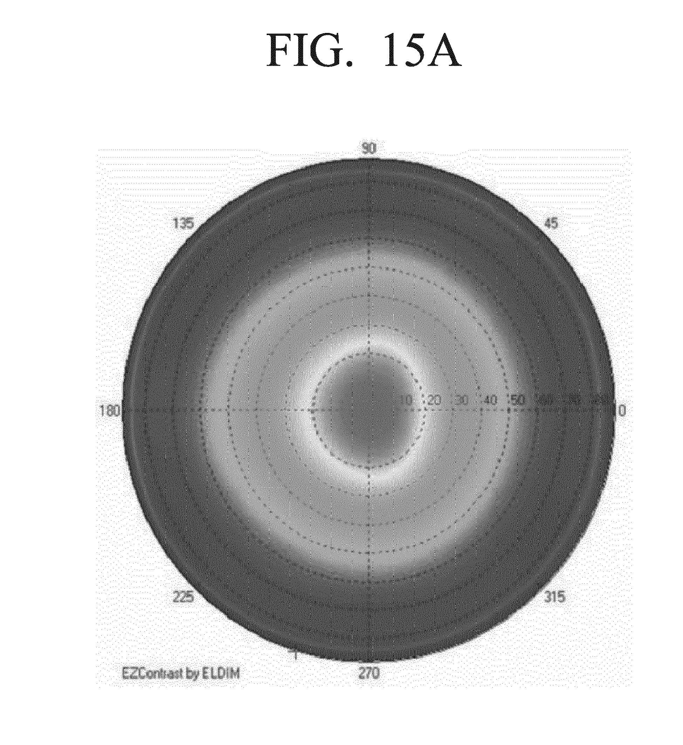

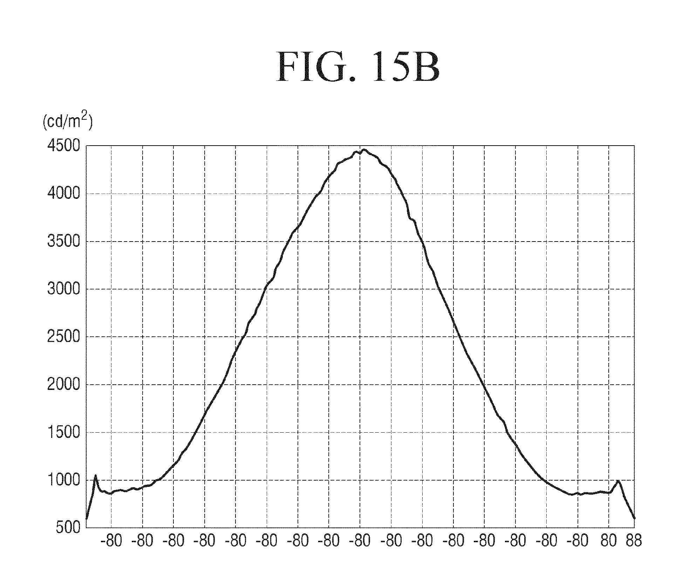

That is, FIGS. 10A and 10B are the brightness distribution image obtained from test #1 and a corresponding graph, FIGS. 11A and 11B are the brightness distribution image obtained from test #2 and a corresponding graph, FIGS. 12A and 12B are the brightness distribution image obtained from test #3 and a corresponding graph, FIGS. 13A and 13B are the brightness distribution image obtained from test #4 and a corresponding graph, FIGS. 14A and 14B are the brightness distribution image obtained from test #5 and a corresponding graph, and FIGS. 15A and 15B are the brightness distribution image obtained from test #6 and a corresponding graph.

Referring to FIGS. 10A to 13B related with the conventional technology, the conventional technology exhibited good brightness distribution and viewing angle 0° only in test #4 where there were three optical sheets (i.e., diffusion sheet, prism sheet, protection sheet) were arranged in front of the LGP.

On the contrary, referring to FIGS. 14A to 15B related with the embodiment, the embodiment exhibited good brightness distribution and viewing angle 0° in test #6 where there was only one optical sheet arranged in front of the LGP.

The central brightness, median brightness and brightness uniformity calculated from tests #4 and #6 are as follows:

**Table 2**

| | Test #4 (Conventional) | Test #6 (Embodiment of invention) |
|---|---|---|
| Front optical sheets used | 3 sheets (Diffusion sheet + prism sheet + protection sheet) | 1 sheet (Diffusion sheet) |
| Central brightness | 6100 nits (100%) | 6710 nits (110%) |
| Median brightness | 5861 nits (100%) | 6447 nits (110%) |
| Brightness uniformity | 82% | 82% |

Referring to Table 2, the LGP 210 according to an embodiment can provide the same level of brightness uniformity as the conventional technology, without requiring more than one diffusion sheet. Further, the LGP 210 according to an embodiment can provide central brightness and median brightness which are enhanced by approximately 10%.

Further, test to compare 3D scanning performance between the LGP 210 according to an embodiment and the conventional LGP was conducted, in which LGPs of tests #1 to #4 were used as the conventional LGPs, and the LGPs of tests #5 and #6 were used as the LGP according to the embodiment.

The test was conducted by measuring the brightness of the light entering portion and the central portion of the LGP corresponding to the light sources, while keeping only one light source among the plurality of light sources (LEDs) arranged on one side of the LGP in on state, and keeping the others off.

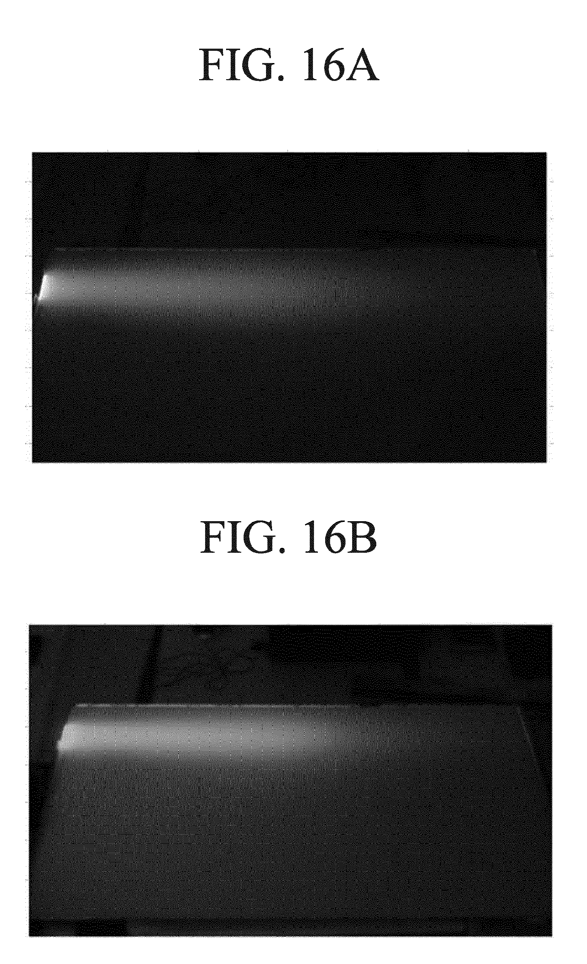

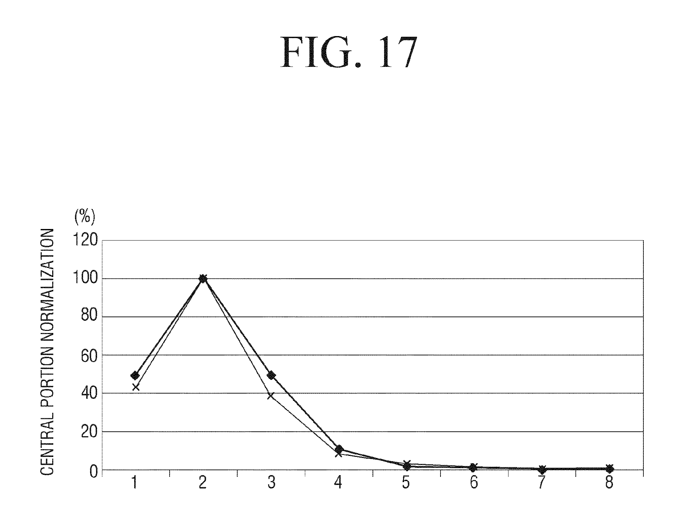

FIGS. 16A and 16B present the images captured in the above-explained tests. Additionally, numerical data calculated from the tests are tabulated into Table 3 and Table 4, and the graphs corresponding to the data of the tables is provided in FIG. 17.

FIGS. 16A and 16B are images of a conventional LGP and a LGP according to an embodiment, each photographed at the 3D scanning efficiency test. Table 3 and Table 4 list the data calculated from the 3D scanning efficiency test on the conventional LGP and the LGP according to the embodiment. FIG. 17 presents two graphs representing brightness distribution data on the central portion of the LGP among the data of Table 3 and Table 4.

**Table 3**

| No | Light source (LED) | Measurement | | Percent (%) | |
|---|---|---|---|---|---|
| 1 | OFF | Light entering portion | Central portion | Light entering portion | Central portion |
| 2 | ON | 49 | 36 | 18% | 50% |
| 3 | OFF | 278 | 72 | 100% | 100% |
| 4 | OFF | 35 | 36 | 13% | 50% |
| 5 | OFF | 8 | 8 | 3% | 11% |
| 6 | OFF | 2 | 2 | 1% | 3% |
| 7 | OFF | 1 | 1 | 0% | 1% |
| 8 | OFF | 1 | 0.5 | 0% | 1% |
| 9 | OFF | 0.5 | 0.5 | 0% | 1% |
| Maximum (Max) | | 278 | 72 | 100% | 100% |
| Contrast (N+3/N) | | | | 0.7% | 3.0% |

**Table 4**

| No | Light source (LED) | Measurement | | Percent (%) | |
|---|---|---|---|---|---|
| 1 | OFF | Light entering portion | Central portion | Light entering portion | Central portion |
| 2 | ON | 34 | 35 | 14% | 41% |
| 3 | OFF | 278 | 86 | 100% | 100% |
| 4 | OFF | 37 | 37 | 16% | 43% |
| 5 | OFF | 7 | 9 | 3% | 10% |
| 6 | OFF | 3 | 3 | 1% | 3% |
| 7 | OFF | 2 | 2 | 1% | 2% |
| 8 | OFF | 1 | 1 | 0% | 1% |
| 9 | OFF | 1 | 1 | 0% | 1% |
| Maximum (Max) | | 238 | 86 | 100% | 100% |
| Contrast (N+3/N) | | | | 1.3% | 3.0% |

Referring to Table 3 and Table 4, the ratio between the brightness at the central portion with respect to the second light source and the brightness at the central portion with respect to the fifth light source is identically 3%. From this, it is revealed that the 3D scanning efficient does not deteriorate from that of the conventional LGP when the LGP 210 according to the embodiment is used. The graph of FIG. 17 also confirms the above. That is, the horizontal axis of the graph of FIG. 17 represents LED numbers, and the longitudinal axis represents the brightness at the central portion of the LGP. The plot with links '■' represents the conventional LGP and the plot with links 'x' represents the LGP according to the embodiment.

The foregoing embodiments and advantages are merely exemplary and are not to be construed as limiting the inventive concept. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A light guide panel (LGP) for use in a display device, the LGP comprising:
a front surface, a rear surface, and four edge surfaces, in which rays of light emitted from light sources are introduced through at least one of the four edge surfaces;
a plurality of lenticular patterns formed on one of the front surface and the rear surface of the LGP; and
a plurality of light emitting patterns which induce the rays of light emitted from the light sources toward the front surface of the LGP,
wherein the plurality of light emitting patterns are integrally formed with the plurality of lenticular patterns.

2. The LGP of claim 1, wherein each of the light emitting patterns has one curved surface.

3. The LGP of claim 2, wherein the light emitting patterns are each formed concavely or convexly on surfaces of the lenticular patterns.

4. The LGP of claim 1, wherein the light emitting patterns are each formed concavely on the lenticular patterns, and have two reflection surfaces inclined with respect to the front surface or the rear surface.

5. The LGP of claim 4, wherein the two reflection surfaces are planar.

6. The LGP of claim 5, wherein the two reflection surfaces are inclined with respect to the rear surface by 35° to 80°.

7. The LGP of claim 5, wherein the two reflection surfaces are at an angle of 70° to 110°.

8. The LGP of claim 4, wherein a pitch between two adjacent light emitting patterns is below 0.5 mm.

9. The LGP of claim 1, wherein the LGP receives the ray of lights through two edge surfaces among the four edge surfaces that are arranged opposite to each other.

10. A backlight unit for use in a display device, comprising:
a light guide panel (LGP) comprising a front surface, a rear surface, and four edge surfaces;
at least one light source which provides rays of light into the LGP through at least one of the four edge surfaces;
a rear optical sheet unit which is arranged in the rear surface of the LGP; and
a front optical sheet unit which is arranged in the front surface of the LGP,
wherein the LGP comprises,
a plurality of lenticular patterns formed convexly on one of the front surface and the rear surface of the LGP; and
a plurality of light emitting patterns which induce the rays of light emitted from the at least one light source towards the front surface of the LGP,
wherein the plurality of light emitting patterns are formed integrally with the plurality of lenticular patterns.

11. The backlight unit of claim 10, wherein the light emitting patterns each comprises one curved surface.

12. The backlight unit of claim 11, wherein the front optical sheet unit comprises a plurality of optical sheets.

13. The backlight unit of claim 10, wherein the light emitting patterns are each formed concavely on the lenticular patterns, and each comprises two reflection surfaces inclined with respect to the front surface or the rear surface.

14. The backlight unit of claim 13, wherein the front optical sheet unit consists of only diffusion sheet.

15. A display device comprising the backlight unit of any of claims 10 to 14.
